# EUROPEAN PATENT APPLICATION

(11) **EP 2 290 923 A1**
(43) Date of publication of application: **02.03.2011**
(21) Application number: 10174078.5
(22) Date of filing: 26.08.2010
(51) Int. Cl.: H04M 1/60

(54) **Apparatus and method for controlling driver terminal**

(30) Priority: 26.08.2009 KR 20090079316; 23.08.2010 KR 20100081343
(71) Applicant: Electronics and Telecommunications Research Institute, Daejeon 305-350 (KR)
(72) Inventor: Kim, Kyong Ho, 305-509, Daejeon (KR); Kim, Hyunsuk, 305-762, Daejeon (KR); Yoon, Daesub, 305-340, Daejeon (KR); Choi, Jong-woo, 301-758, Daejeon (KR)
(74) Representative: Betten & Resch

(57) **Abstract**

The apparatus for controlling a driver terminal within a vehicle recognizes situation information of the driver and driving situation information of the vehicle and analyzes whether the driver' situation is a situation in which the driver can receive a call from an external caller terminal on a basis of the situation information of the driver and the driving situation information of the vehicle. Next, the terminal control apparatus determines a control instruction for the call made to the driver terminal on a basis of the analyzed result when a call is made from the caller terminal and controls the call made to the driver terminal in accordance with the control instruction.

## Description

### BACKGROUND OF THE INVENTION

### (a) Field of the Invention

The present invention relates to an apparatus and method for controlling a driver terminal. More particularly, the present invention relates to an apparatus and method for controlling a telephone call made to a driver terminal on the basis of a vehicle's driving situations and the driver' situations.

### (b) Description of the Related Art

Significant parts of car accidents are occurring because of a driver's carelessness or faults.

Recently, the types and number of various Information Technology (IT) devices used in the vehicle are sharply increasing. The devices are problematic in that they serve as a serious risk factor in safe driving because they divert a driver's attention from driving and increase driving workload. In particular, the manipulation of a mobile communication terminal, such as a mobile phone, or telephone conversation using the mobile communication terminal while driving serves as the most typical risk factor in safe driving. Actually, accidents are frequently occurring because of the manipulation or telephone conversation.

A conventional mobile communication terminal provides a driver with received call information by not taking the driver's status or a vehicle's driving situations into consideration. For example, in a situation where a driver must carefully check surrounding vehicles and traffic conditions, such as that when the driver's vehicle enters an intersection or a situation where the vehicle drives a curve on the expressway at high speed, a caller makes a telephone call to the driver because he does not know the situation of the driver who is a recipient. The mobile communication terminal of the driver also informs the driver of the reception of the call because it does not know the driver' situation or the vehicle's driving situations. Consequently, the driver's attention is diverted by the mobile communication terminal in order to receive the call. Accordingly, there is a problem in that a driver can cause an accident, such as a minor collision or a personal accident, because he does not properly check the flow of surrounding vehicles.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide an apparatus and method for controlling a telephone call made to a driver terminal on the basis of a vehicle's driving situations and the driver' situations.

An exemplary embodiment of the present invention provides a method of controlling a driver terminal within a vehicle, comprising
recognizing situation information of the driver and driving situation information of the vehicle, analyzing whether the driver' situation is a situation in which the driver can receive a call from an external caller terminal on the basis of the situation information of the driver and the driving situation information of the vehicle, determining a control instruction for a call made to the driver terminal on the basis of the analyzed result when the call is made from the caller terminal, and controlling the call made to the driver terminal in accordance with the control instruction.

An exemplary embodiment of the present invention provides an apparatus for controlling a driver terminal within a vehicle, comprising
a comprehensive analysis unit for analyzing whether a driver' situation is a situation in which the driver can receive a call made to the driver terminal from an external caller terminal on the basis of situation information of the driver and driving situation information of the vehicle and a terminal controller for, when a call is made from the caller terminal, determining a control instruction for the call made to the driver terminal on a basis of the analyzed result of the comprehensive analysis unit and controlling the call made to the driver terminal in accordance with the control instruction.

### BRIEF DESCRIPTION OF THE DRAWINGS

FIG. 1 is a diagram schematically showing an apparatus for controlling a terminal according to an exemplary embodiment of the present invention; and
FIG. 2 is a flowchart illustrating a method of controlling a terminal according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In the entire specification, unless explicitly described to the contrary, the word "comprise" and variations such as "comprises" or "comprising", will be understood to imply the inclusion of stated elements but not the exclusion of any other elements.

In this specification, a terminal may refer to a Mobile Station (MS), a Mobile Terminal (MT), a Subscriber Station (SS), a Portable Subscriber Station (PSS), a User Equipment (UE), an Access Terminal (AT) or the like and include all or part of the functions of the MS, the MT, the SS, the PSS, the UE, the AT or the like.

In this specification, a Base Station (BS) may refer to an Access Point (AP), a Radio Access Station (RAS), a Node-B, an Evolved Node-B (eNB), a Base Transceiver Station (BTS), a Mobile Multihop Relay (MMS)-BS or the like and include all or part of the functions of the AP, the RAS, the Node-B, the eNB, the BTS, the MMS-BS or the like.

Hereinafter, an apparatus and method for controlling a driver terminal according to exemplary embodiments of the present invention is described in detail with reference to the accompanying drawings.

First, the apparatus for controlling a driver terminal (hereinafter referred to as a 'terminal control apparatus') according to the exemplary embodiment of the present invention controls a telephone call made to the terminal of a driver on the basis of a vehicle's driving situations and the driver' situations. Here, the terminal control apparatus can be included in the terminal of a driver within a vehicle, but not limited thereto.

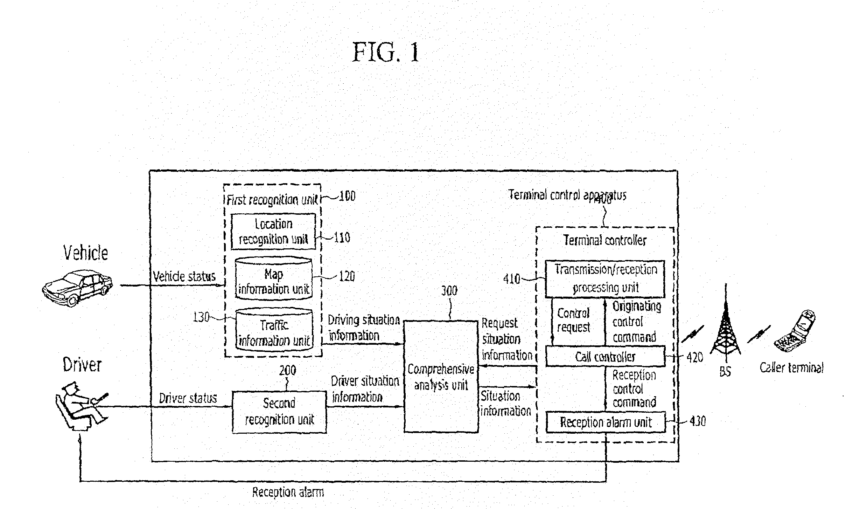

FIG. 1 is a diagram schematically showing the terminal control apparatus according to the exemplary embodiment of the present invention.

As shown in FIG. 1, an environment to which the terminal control apparatus according to the exemplary embodiment of the present invention is applied includes a vehicle, a driver within the vehicle, a driver terminal (not shown), the terminal control apparatus, a BS, and a caller terminal.

First, the terminal control apparatus includes a first recognition unit 100, a second recognition unit 200, a comprehensive analysis unit 300, and a terminal controller 400. The terminal controller 400 according to an exemplary embodiment of the present invention can includes the driver terminal, but not limited thereto.

The first recognition unit 100 recognizes driving situation information about the vehicle. Here, the driving situation information of the vehicle includes the location and driving direction of the vehicle, traffic conditions, whether the vehicle enters an intersection, a cross slope of a road, vehicle status information, and so on.

More particularly, the first recognition unit 100 senses a vehicle' status from the vehicle and recognizes the driving situation information about the vehicle on the basis of vehicle status information, map information, traffic information, and location information of the vehicle which correspond to the sensed result. Here, the vehicle status information refers to driving-related information which can be detected from the vehicle, such as the speed, acceleration, wheel steering angle, and brake foot power of the vehicle. The driving situation information of the vehicle further includes the location and driving direction of the vehicle, traffic conditions, whether the vehicle enters an intersection, a cross slope of a road, and so on.

To this end, the first recognition unit 100 includes a location recognition unit 110, a map information unit 120, and a traffic information unit 130.

The location recognition unit 110 confirms a current location of the vehicle. The location recognition unit 110 according to an exemplary embodiment of the present invention can include a Global Positioning System (GPS), but not limited thereto.

The map information unit 120 confirms information of a specific range (i.e., map information) including the current location of the vehicle. The map information includes, for example, a lane number in which the vehicle located within the specific range is driving, whether the vehicle is driving near an intersection, a regulation speed, whether a left turn is permitted, and buildings, stores, etc. which are displayed on the map.

The traffic information unit 130 confirms traffic information of the specific range, including the current location of the vehicle. Here, the traffic information includes traffic congestion, accidents occurred, weather, and so on within the specific range.

The second recognition unit 200 senses the driver's status and recognizes the driver' situation information on the basis of the sensed result. Here, the driver' status includes an action status or physiological state of the driver. The action status includes motions or states which are pertinent to the actions of the driver, such as the movements of the head, the legs, and arms, gestures, voice, and so on of the driver. Further, the physiological state includes the driver's physiological states, such as a pulse rate, body temperature, an electromyogram (ECG), blood pressure, and brain waves of the driver.

More particularly, the second recognition unit 200 recognizes various pieces of driver situation information, such as the driver's distraction, driving workload, and stress, on the basis of action status information or physiological state information which corresponds to the sensing result of the driver' status and sends them to the comprehensive analysis unit 300.

The comprehensive analysis unit 300 overall analyzes whether a driver's current situation is a situation in which the driver can receive a call made to the driver terminal from an external caller terminal, on the basis of the driving situation information and the driver situation information. Further, the comprehensive analysis unit 300 sends situation information, corresponding to a result of the analysis, to the terminal controller 400.

If, as a result of the analysis, the driver's current situation is a situation in which the driver cannot receive the call made to the driver terminal, the comprehensive analysis unit 300 checks the degree (or level or severity) of the situation, an estimated time that the situation will continue, and so on. Here, the comprehensive analysis unit 300 sends the situation information, including, for example, "a driver's current situation is a situation in which the driver can receive the call made to the driver terminal and the situation will continue about 20 seconds.", to the terminal controller 400.

If the driver's current situation is a situation in which the driver can receive the call made to the driver terminal, the comprehensive analysis unit 300 sends the situation information, including, for example, "a driver's current situation is a situation in which the driver cannot receive the call made to the driver terminal, the degree of the situation is good (or fair or poor), and the situation will continue about 12 seconds", to the terminal controller 400.

The terminal controller 400 includes a transmission/reception processing unit 410, a call controller 420, and a reception alarm unit 430.

The transmission/reception processing unit 410 sends a control request to the call controller 420 when a call from an external caller terminal is made to the driver terminal. Next, if the driver's situation is a situation in which the driver cannot receive the call, the transmission/reception processing unit 410 receives a calling control instruction and controls the caller terminal in accordance with the calling control instruction. Here, the calling control instruction includes a standby mode in which call waiting tones are generated to the caller terminal, an ARS mode in which a specific message is sent to the caller terminal, and so on.

In case where the caller terminal is controlled according to the ARS mode, the transmission/reception processing unit 410 sends a specific message, reading, for example, "I am driving and unable to receive the call. Please make a call again after 00 minutes (i.e., a specific waiting time)." or "I am driving and difficult to receive the call. In an urgent case, please press # (i.e., a specific button of the driver terminal), and a called party will be immediately informed", to the caller terminal.

When the control request is received from the transmission/reception processing unit 410, the call controller 420 requests situation information from the comprehensive analysis unit 300. Next, the call controller 420 receives the situation information corresponding to the request and sends a control instruction, corresponding to the situation information, to the transmission/reception processing unit 410 or the reception alarm unit 430.

More particularly, if the received situation information corresponds to a situation in which the driver cannot receive the call made to the driver terminal from the external caller terminal, the call controller 420 sends a calling control instruction to the transmission/reception processing unit 410.

However, if the received situation Information corresponds to a situation in which the driver can receive the call made to the driver terminal from the external caller terminal, the call controller 420 sends a called control instruction, instructing the reception alarm unit 430 to inform the driver that the call has been received, to the reception alarm unit 430.

The reception alarm unit 430 informs the driver that the call has been made from the external caller terminal in accordance with a predetermined alarm method (e.g., ring tones or vibration), set in the driver terminal, on the basis of the called control instruction received from the call controller 420.

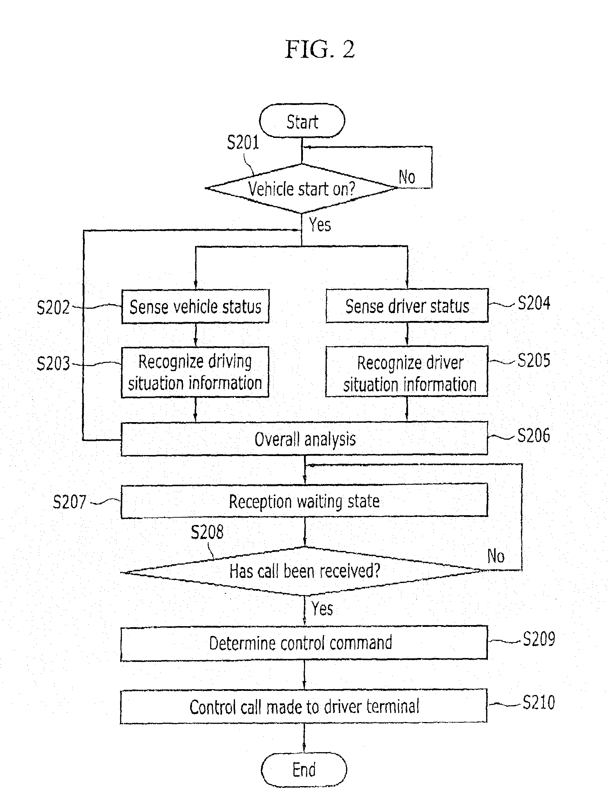

Hereinafter, the method of controlling a telephone call made to the driver terminal on the basis of the vehicle's driving situations and the driver's situations is described in detail with reference to FIG. 2.

FIG. 2 is a flowchart illustrating the method of controlling a terminal according to an exemplary embodiment of the present invention.

First, the terminal control apparatus according to an exemplary embodiment of the present invention can include a driver terminal within a vehicle, but not limited thereto.

As shown in FIG. 2, the terminal control apparatus checks whether the starting device of the vehicle is turned on at step S201.

If, as a result of the check, the starting device of the vehicle is turned on, the terminal control apparatus senses a vehicle status from the vehicle at step S202. Next, the terminal control apparatus recognizes driving situation information of the vehicle on the basis of vehicle status information, map information, traffic information, location information of the vehicle, and so on which correspond to the sensed result at step S203. Here, the driving situation information of the vehicle includes the location and driving direction of the vehicle, traffic conditions, whether the vehicle enters an intersection, a cross slope of a road, and so on.

Further, the terminal control apparatus senses a driver status at step S204. Next, the terminal control apparatus recognizes situation information of the driver on the basis of the sensed result at step S205, Here, the driver status includes an action status or physiological state of the driver. The action status includes motions or states which are pertinent to the actions of the driver, such as the movements of the head, the legs, and arms, gestures, voice, and so on of the driver. Further, the physiological state includes the driver's physiological state, such as a pulse rate, body temperature, an electromyogram (ECG), blood pressure, and brain waves of the driver.

The terminal control apparatus overall analyzes whether the driver's current situation is a situation in which the driver can receive a call made to the driver terminal from an external caller terminal on the basis of the driving situation information and the driver situation information at step S206.

The terminal control apparatus according to an exemplary embodiment of the present invention can repeatedly perform the steps S202 to S206 (i.e., the processes of recognizing the driving situation information and the driver situation information and overall analyzing the recognized result) in a predetermined cycle, but not limited thereto.

Further, during the time for which the driving situation information and the driver situation information are continuously analyzed, the terminal control apparatus maintains a reception standby state in which the apparatus waits for a call to be made to the driver terminal from an external caller terminal at step S207.

The terminal control apparatus determines whether a call has been made to the driver terminal in the reception standby state at step S208.

If, as a result of the determination, a call is determined to have been made to the driver terminal, the terminal control apparatus determines a control instruction for the call made to the driver terminal on the basis of situation information at step S209 and controls the call made to the driver terminal in accordance with the determined control instruction at step S210. Here, the situation information includes the driving situation information and the driver situation information which have been repeatedly analyzed in a predetermined cycle.

If the driver's current situation is a situation in which the driver cannot receive the call made to the driver terminal, the terminal control apparatus generates call waiting tones or sends a specific message, reading, for example, "I am driving and unable to receive the call. Please make a call again after 00 minutes (i.e., a specific waiting time).", to the caller terminal.

If the driver's current situation is a situation in which the driver can receive the call made to the driver terminal, the terminal control apparatus informs the driver that the call has been received in accordance with a predetermined alarm method set in the driver terminal.

Finally, the driver notices the reception of the call in accordance with the predetermined alarm method, such as ring tones or vibration, and checks a caller ID or receives the call.

In accordance with the present invention, a telephone call made to a driver can be controlled in a safe way on the basis of a vehicle's driving situations and a driver' situations. Accordingly, the safety of a driver can be made secure and traffic accidents can be prevented.

The above exemplary embodiment of the present invention is not implemented by only a method and an apparatus, but may be implemented using a program for realizing a function corresponding to the construction of the exemplary embodiment of the present invention or a recording medium on which the program is recorded. The implementation can be easily achieved by those having ordinary skill in the art to which the present invention pertains from the above exemplary embodiment.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method of controlling a driver terminal within a vehicle, the method comprising:
recognizing situation information of the driver and driving situation information of the vehicle;
analyzing whether the driver' situation is a situation in which the driver can receive a call from an external caller terminal on a basis of the situation information of the driver and the driving situation information of the vehicle;
when a call is made from the caller terminal, determining a control instruction for the call made to the driver terminal on a basis of the analyzed result; and
controlling the call made to the driver terminal in accordance with the control instruction.

2. The method of claim 1, wherein the determining of a control instruction includes the driver terminal generating call waiting tones or sending a specific message to the caller terminal, if the analyzed result corresponds to a situation in which the driver cannot receive the call.

3. The method of claim 1 or 2, wherein the determining of a control instruction includes the driver terminal informing the driver that the call has been received using a predetermined alarm method, if the analyzed result corresponds to a situation in which the driver can receive the call.

4. The method of claim 1, 2 or 3, wherein the analyzing is repeatedly performed on the basis of the situation information of the driver and the driving situation information of the vehicle in a predetermined cycle.

5. The method of one of claims 1 to 4, wherein the recognizing includes:
sensing the vehicle status and recognizing the driving situation information of the vehicle on a basis of at least one of vehicle status information, map information, traffic information, and location information of the vehicle which correspond to the sensed result; and
sensing an action status or physiological state of the driver and recognizing the situation information of the driver on a basis of the sensed result.

6. The method of claim 5, wherein:
the action status of the driver comprises a motion or a state pertinent to at least one of actions of the driver, such as movements of a head, legs, and arms, gestures, and voice of the driver, and
the physiological state of the driver comprises at least one of a pulse rate, body temperature, an electromyogram, blood pressure, and brain waves of the driver.

7. An apparatus for controlling a driver terminal within a vehicle, the apparatus comprising:
a comprehensive analysis unit for analyzing whether a driver' situation is a situation in which the driver can receive a call made to the driver terminal from an external caller terminal on a basis of situation information of the driver and driving situation information of the vehicle; and
a terminal controller for, when a call is made from the caller terminal, determining a control Instruction for the call made to the driver terminal on a basis of the analyzed result of the comprehensive analysis unit and controlling the call made to the driver terminal in accordance with the control instruction.

8. The apparatus of claim 7, wherein the terminal controller comprises:
a transmission/reception processing unit for sensing the call from the caller terminal and, if the driver' situation is a situation in which the driver cannot receive the call, generating call waiting tones or sending a specific message to the caller terminal in accordance with the control instruction;
a call controller for, when the trarismission/reception processing unit senses that the call has been made from the caller terminal, receiving the analyzed result from the comprehensive analysis unit and determining the control instruction; and
a reception alarm unit for, if the driver' situation is a situation in which the driver can receive the call, informing the driver that the call has been received using a predetermined alarm method set in the driver terminal in accordance with the control instruction.

9. The apparatus of claim 7 or 8, further comprising:
a first recognition unit for sensing the vehicle' status and recognizing the driving situation information of the vehicle on a basis of at least one of vehicle status information, map information, traffic information, location information of the vehicle which correspond to the sensed result; and
a second recognition unit for sensing an action status or physiological state of the driver and recognizing the situation information of the driver on a basis of the sensed result.

10. The apparatus of claim 9, wherein the first recognition unit comprises:
a location recognition unit for confirming a current location of the vehicle;
a map information unit for gathering the map information induing at least one of pieces of information which correspond to a lane number in which the vehicle is driving, whether the vehicle is driving near an intersection, a regulation speed, whether a left turn is permitted, and surrounding buildings and stores; and
a traffic information unit for gathering the traffic information including at least one of traffic congestion, accidents occurred, and weather which correspond to the current location of the vehicle.

11. The apparatus of claim 9 or 10, wherein:
the action status of the driver comprises a motion or a state pertinent to at least one of actions of the driver, such as movements of a head, logs, and arms, gestures, and voice of the driver, and
the physiological states of the driver comprises at least one of a pulse rate, body temperature, an electromyogram, blood pressure, and brain waves of the driver.

12. The apparatus of one of claims 1 to 11, wherein the comprehensive analysis unit determines, if, as a result of the analysis, the driver' situation is a situation in which the driver cannot receive the call, a degree of the situation and an estimated time that the situation will continue.
